# EUROPEAN PATENT APPLICATION

(11) **EP 1 638 332 A2**
(43) Date of publication of application: **22.03.2006**
(21) Application number: 05105666.1
(22) Date of filing: 24.06.2005
(51) Int. Cl.: H04N 7/167

(54) **System for controlling conditional access systems and method for controlling conditional access systems**

(30) Priority: 20.09.2004 PL 37018604
(71) Applicant: Advanced Digital Broadcast Polska Sp. zo.o., 65-119 Zielona Gora (PL); Advanced Digital Broadcast Ltd., Hsin-Tien City Taipei County 231 (TW)
(72) Inventor: Michalczak, Maciej, 65-245, Zielona Gora (PL); Czerwinski, Arkadiusz, 67-100, Nowa Sol (PL)
(74) Representative: Hudy, Ludwik

(57) **Abstract**

In a system for controlling conditional access systems (143, 145, 147, 149) for television data in a digital television decoder having a signal processing block with a decoder descrambler and a conditional access block with at least one conditional access system, the conditional access block (141) is provided with conditional access system clients (142, 144, 146, 148), which handle communication with the conditional access systems (143, 145, 147, 149) via a client interface (152) uniform for all clients (142, 144, 146, 148). Furthermore, the conditional access block (141) is provided with a conditional access clients manager (151), which handles communication with conditional access systems (143, 145, 147, 149) via the clients (142, 144, 146, 148) via a client interface (152) and controls descrambling of signal in the decoder by selecting the conditional access system (143, 145, 147, 149) responsible for descrambling the currently received signal and controlling the decoder descrambler (132) depending on the selected conditional access system (143, 145, 147, 149).

## Description

The present invention relates to a system for controlling various conditional access systems (CA) in a digital television decoder and a method for controlling conditional access systems.

In digital television decoders, a received signal can be descrambled by conditional access systems embedded in the decoder or provided by external modules.

The conditional access systems embedded in the decoder use a descrambler, which is an integral part of the decoder, as well as smart cards placed in specific slots of the decoder. These smart cards provide data necessary to configure the decoder descrambler. Various specialist providers usually design such systems in the form of software modules, but the interfaces of such systems differ. In the currently used decoders, support for specific embedded conditional access systems requires the adaptation of the remaining software of the decoder to the interface of that system. Such a solution is unsatisfactory, since it requires a considerable workload and resources to produce compatible decoder software.

The conditional access systems provided by external modules use a descrambler, which is an integral part of the module, as well as smart cards placed in the slot of the module. The smart cards provide data necessary to configure the descrambler of the module. Such systems are usually provided by Common Interface (Cl) modules, or by Point of Deployment (POD) modules. These modules are placed in specific slots of the decoder. Such systems can be operated via a standard Cl or POD interface, provided by a software driver embedded in the decoder. If the signal is descrambled by the descrambler of the external module, it is not transmitted through the decoder descrambler, to avoid double descrambling.

From the PCT Publication No. WO0174075A1 entitled "*Removable smart card interface for set top box*" there is known a digital television decoder with a replaceable POD module. The signal is descrambled on the basis of the data exchanged with a smart card placed in the POD module by a descrambler built into the POD module or by the decoder descrambler. Therefore, this solution refers only to smart cards for a POD module. It does not solve the problem of controlling several conditional access systems having various interfaces and concurrently requesting the access to the decoder descrambler.

From the US Patent No. US 6,185,735 entitled "*Method of operating an apparatus intended to permit access to services*" there is known a method for operating a digital television decoder in which the processing of signals, scrambled by an algorithm other than the one used by a decoder provider, is blocked for a specific time. The decoder has only one conditional access system, which can support various scrambling methods but only if they are compatible with that conditional access system. Therefore, this solution does not allow concurrent operation of several conditional access systems in the decoder.

From the European Patent No. EP 00562295 entitled "*Method and apparatus for controlling several smart cards*" there is known a method for controlling several smart card slots used for descrambling signals of various broadcasters, in which, after a card is selected, the power supply to the other cards is switched off. However, the method for controlling the descrambler operation has not been described in detail.

The drawback of the known digital television decoders is thus their inability to provide easy co-ordination of the different, currently available conditional access systems. The addition of a new conditional access system requires modification of the existing software to provide compatibility, which is time-consuming and expensive.

The aim of the present invention is to create a simple system for controlling several different conditional access systems in a digital television decoder to avoid, or at least greatly reduce, the disadvantages of prior art.

In a system for controlling conditional access systems for television data in a digital television decoder having a signal processing block with a decoder descrambler and a conditional access block with at least one conditional access system, the conditional access block comprises conditional access system clients, which handle communication with these systems via a client interface uniform for all clients, and it comprises a conditional access clients manager, which handles communication with conditional access systems via the clients via a client interface and controls descrambling of signal in the decoder by selecting the conditional access system responsible for descrambling the signal being currently received and controlling the decoder descrambler depending on the selected conditional access system.

Preferably, the client is a block which converts events of the conditional access system-specific program interface to events of the client interface, and converts events of the client interface to events of the conditional access system-specific program interface.

The conditional access clients manager can comprise virtual descramblers, which are software objects emulating the interface of the decoder descrambler, where a separate virtual descrambler is assigned to each conditional access system such that the system perceives the virtual descrambler as the decoder descrambler, and the manager additionally comprises a decoder descrambler switch, which controls the decoder descrambler by transmitting to it the configuration of the virtual descrambler assigned to a selected conditional access system.

Preferably, the virtual descrambler is a software object whose structure emulates the hardware interface of the decoder descrambler and its structure describes at least the slots of the decoder descrambler and their operating configuration.

The conditional access clients manager can comprise a client's table, in which data describing the systems handled by individual clients are stored, the data describing at least the requirement of a given conditional access system for access to the decoder descrambler and the capability to descramble the signal currently being received by the system, and the data being used to select the conditional access system responsible for descrambling the currently received signal.

Additionally in the clients table there can be stored priorities of individual clients, deciding on the priority of one system in preference to other systems capable of descrambling the currently received stream, while selection of the conditional access system responsible for descrambling the currently received signal.

The conditional access clients manager can comprise a PSI data memory, in which selected data related to a currently received stream is stored, the data being read by conditional access systems after notification about changes in these data.

Preferably, the conditional access systems are systems embedded in the decoder and/or systems provided by external modules.

Preferably, the clients are software modules for conditional access systems, which allow other modules of decoder software communicating with the conditional access systems via an interface uniform for all clients.

In a method for controlling conditional access systems for television data in a digital television decoder provided with a decoder descrambler and at least one conditional access system, the conditional access systems are communicated via conditional access clients via a client interface uniform for all clients and via a conditional access client manager, which communicates with conditional access systems via clients and via a client interface, the descrambling of the signal in the decoder is controlled by selecting the conditional access system responsible for descrambling the currently received signal and controlling the decoder descrambler depending on the selected conditional access system.

In the conditional access client manager there can be created virtual descramblers, which are software objects emulating the interface of the decoder descrambler, and a separate virtual descrambler is an assigner to each conditional access system such that the system perceives the virtual descrambler as the decoder descrambler, and the decoder descrambler is controlled via the decoder descrambler switch, by transmitting to it the configuration of the virtual descrambler assigned to a selected conditional access system.

A clients table can be created in the conditional access clients manager, in which data describing the systems handled by individual clients are stored, the data describing at least the requirement of a given conditional access system for access to the decoder descrambler and the capability to descramble signals currently received by the system, and the data being used to select the conditional access system responsible for descrambling the currently received signal.

The conditional access system responsible for descrambling the currently received stream can be selected from systems which are capable of descrambling the currently received stream.

The conditional access system responsible for descrambling the currently received stream can be selected when a change of descrambling capability of the currently received stream by one of systems is detecting the clients table.

When a conditional access system is selected which does not require access to a decoder descrambler, the decoder descrambler can be de-activated.

The client table can store priorities of individual clients, deciding on a priority of one system versus other systems capable of descrambling the currently received stream, while selection of the conditional access system responsible for descrambling the currently received signal.

The conditional access clients manager can comprise a PSI data memory, in which selected data related to a currently received stream is stored, the data being read by conditional access systems after notification about changes in these data.

Preferably, the conditional access systems are systems embedded in the decoder and/or systems provided by external modules.

Preferably, the clients are software modules for conditional access systems, which allow other modules of decoder software communicating with the conditional access systems via an interface uniform for all clients.

In a method for controlling conditional access systems for television data in a digital television decoder provided with a decoder descrambler and at least one conditional access system, the conditional access systems are communicated via conditional access clients via a client interface uniform for all clients and via a conditional access client manager, which communicates with conditional access systems via clients and via a client interface, the descrambling of the signal in the decoder is controlled by selecting the conditional access system responsible for descrambling the currently received signal and controlling the decoder descrambler depending on the selected conditional access system.

In the conditional access client manager there can be created virtual descramblers, which are software objects emulating the interface of the decoder descrambler, and a separate virtual descrambler is an assigner to each conditional access system such that the system perceives the virtual descrambler as the decoder descrambler, and the decoder descrambler is controlled via the decoder descrambler switch, by transmitting to it the configuration of the virtual descrambler assigned to a selected conditional access system.

A clients table can be created in the conditional access clients manager, in which data describing the systems handled by individual clients are stored, the data describing at least the requirement of a given conditional access system for access to the decoder descrambler and the capability to descramble signals currently received by the system, and the data being used to select the conditional access system responsible for descrambling the currently received signal.

The conditional access system responsible for descrambling the currently received stream can be selected from systems which are capable of descrambling the currently received stream.

The conditional access system responsible for descrambling the currently received stream can be selected when a change of descrambling capability of the currently received stream by one of systems is detecting the clients table.

When a conditional access system is selected which does not require access to the decoder descrambler, the decoder descrambler can be de-activated.

The clients table additionally can store priorities of individual clients, deciding on the priority of one system versus other systems capable of descrambling the currently received stream, while selection of the conditional access system responsible for descrambling the currently received signal.

The system with the highest priority can be selected from the systems which are capable of descrambling the currently received signal as the system responsible for descrambling the currently received signal.

In the conditional access clients manager, a Program Specific Interface (PSI) data memory can be created, in which selected data related to the currently received stream is stored, and if the data changes, a message about the change is sent to the conditional access systems.

Preferably, in each client, when a message on PSI data change is received, the PSI data is read from the PSI memory, analyzed in the conditional access system, and information is sent to the conditional access clients manager about the capability of descrambling the currently received signal by that system.

In the accompanying drawings one of the possible embodiments of the present invention is shown, where:
Fig. 1 presents a structure of a digital television decoder with a system for controlling several conditional access systems;
Fig. 2A presents a method for communication between conditional access systems and other blocks via clients;
Fig. 2B presents operation of a client;
Fig. 3 presents a structure of a conditional access clients manager;
Fig. 4 presents a flow diagram of a procedure for updating PSI data in a manager memory;
Fig. 5 presents a flow diagram of a procedure for reading PSI data by individual clients; and
Fig. 6 presents a flow diagram of a descrambler switch procedure of operation.

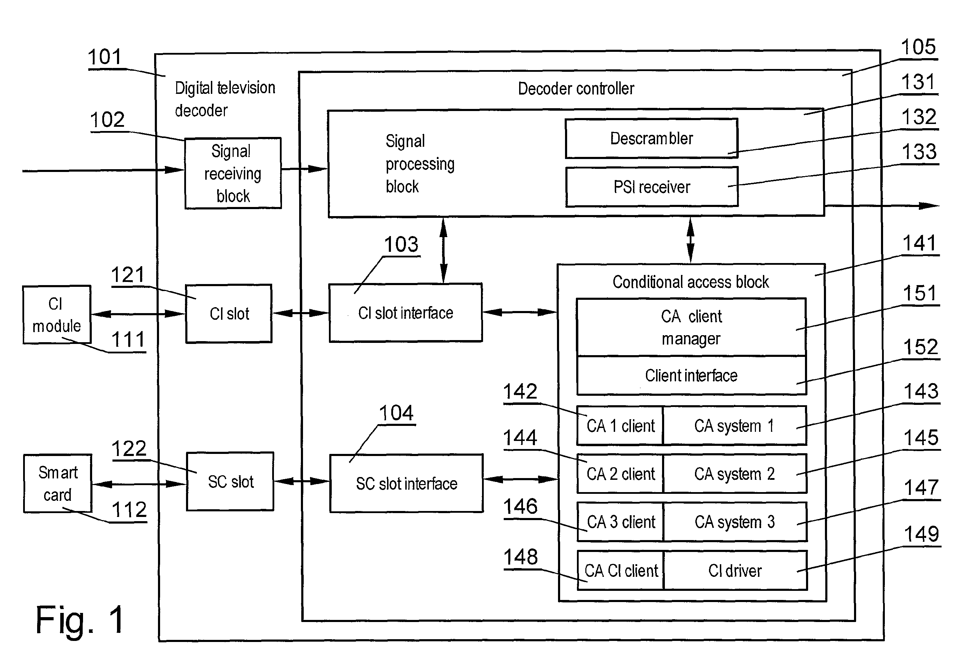

Fig. 1 presents a general structure of a digital television decoder with a system for controlling several conditional access systems. The main element of the decoder 101 is the decoder controller 105, comprising specialized signal processing elements and computing modules, which operate various software modules. The decoder receives a digital television signal, transmitted by satellite, cable, or terrestrially, via the signal receiving block 102, comprising, for example, a tuner and a demodulator. The signal receiving block 102 can be a multichannel block for receiving signals from several sources, which transmits digital data streams to the signal processing block 131, which converts the signal to a format acceptable by a user terminal. For example, it decodes the MPEG format and converts the data to PAUNTSC format. The signal received by the signal processing block 131 can be scrambled. The signal processing block comprises a descrambler 132 and a PSI receiver 133. The descrambler 132 descrambles the received signal, its operation controlled by the conditional access block 141. The PSI receiver 133 monitors PSI data and transmits PSI data related to access control to the conditional access block 141. The PSI data transmitted to the conditional access block 141 may include a Program Map Table (PMT) and a Conditional Access Table (CAT).

The decoder is provided with a slot 121 for handling Cl modules 111 and a slot 122 for handling smart cards (SC) 112. This is only an exemplary configuration. The decoder may also be provided with additional slots to receive input signals by means described earlier. Additionally, or instead of the Cl slot, the decoder may be provided with a slot for handling POD modules. The access to resources of the Cl module 111 and the smart card 112 inserted to the Cl slot 121 and the SC slot 122 respectively is enabled by the Cl slot interface 103 and the SC slot interface 104 respectively. These interfaces are low-level software modules which provide the resources of a card or a module inserted to a specific slot via a specific program interface. The Cl slot interface is additionally connected to the signal processing block 131, from which it reads a scrambled stream, and after its descrambling, it returns a descrambled stream.

The conditional access block 141 of this decoder controls the descrambling of the signal. In this embodiment, the signal can be descrambled by the decoder descrambler 132, controlled by one of the embedded conditional access systems, or by a descrambler of the Cl module, controlled by a conditional access system of the Cl module.

The conditional access block 141 cooperates with conditional access systems. These can be embedded conditional access CA systems 143, 145, 147, which cooperate with smart cards, or conditional access systems provided by Cl or POD modules, which may be communicated by the Cl or POD driver 149.

One of the elements of the invention are modules for conditional access systems, referred to as clients 142, 144, 146, 148, which allow communication with those systems via an application program interface API uniform for all clients. Thanks to such solution, the other software modules of the decoder for example, the client manager must handle only the client interface to communicate with every CA system.

The next element of the conditional access block 141 is a client manager 151. The conditional access CA client manager 151, as presented in this embodiment, is a block which controls the descrambling of the signal by selecting a CA system for descrambling and controlling the decoder descrambler. It is a separate hardware module, being either a part of the decoder controller, or a module of decoder controller software. For each of embedded conditional access clients, the CA client manager provides a virtual descrambler, which is a software module emulating the interface of the decoder descrambler, which allows each embedded conditional access systems to operate as if it were connected directly to the decoder descrambler. In addition, the CA client manager contains a clients' table, which specifies, if the system handled by a given client requires access to the decoder descrambler, if it is capable of descrambling of the currently received stream and the priority of a given client. On the basis of these data, the CA client manager selects from the clients capable of descrambling the currently received stream, that which will perform the descrambling. If a client of an embedded conditional access system is selected, then the manager, via the descrambler switch, sets connection between the virtual descrambler of that client and the decoder descrambler. If a client of a conditional access system of an external module is selected, then the decoder descrambler is deactivated. The manager communicates with the clients via client interface 152.

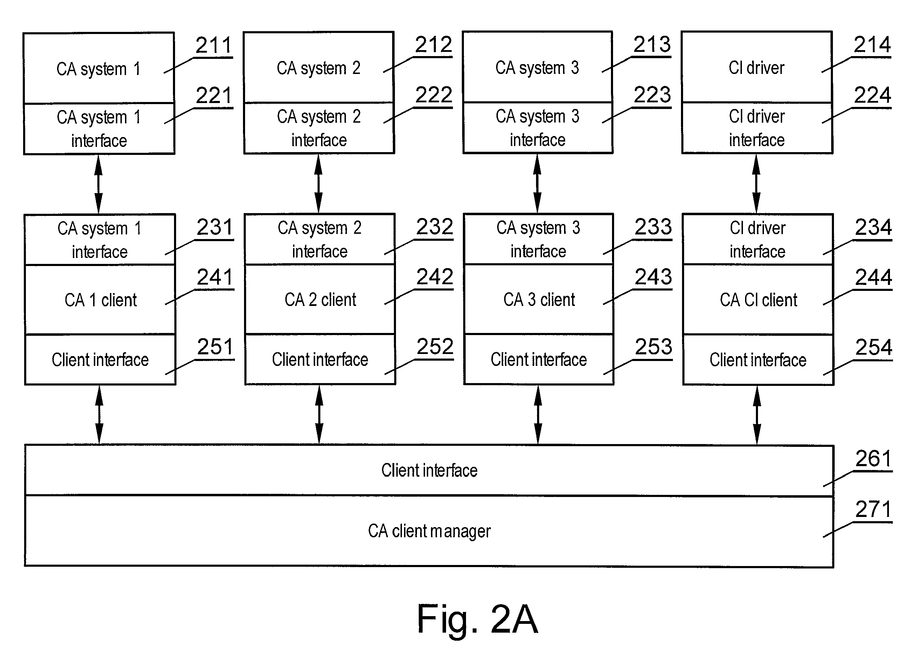

Fig. 2A presents a method for communication between a conditional access system and other blocks via clients. The conditional access systems 211, 212, 213, 214 communicate via system-specific interfaces, 221, 222, 223, 224, respectively. Each conditional access system is handled by a separate client 241, 242, 243, 244. Each client communicates with the system it handles via its system-specific interface, 231, 232, 233, 234, respectively. The main task of the client is to convert the messages read from the system-specific interface to messages of the client interface 251, 252, 253, 254, which is uniform for many clients. By these means the other blocks of the system, for example the CA client manager 271, may communicate with the conditional access system via clients, using a uniform client interface 261. Preferably, all conditional access systems are handled by clients enabling communication with them via the client interface. However, the invention is advantageous only if there are at least two clients providing a client interface.

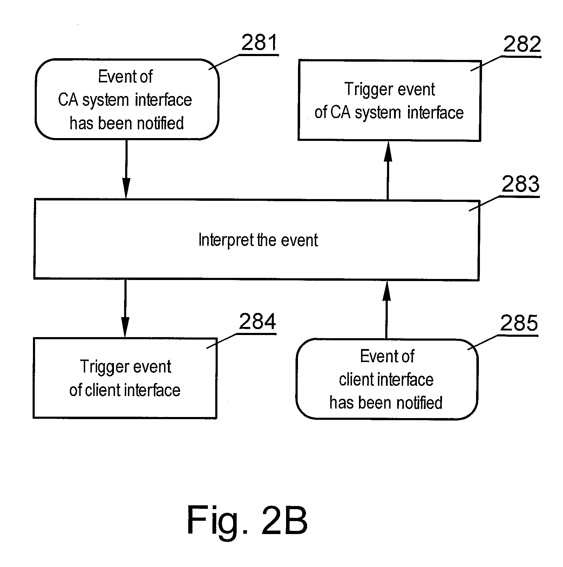

Fig. 2B presents a schematic of client operation. When, at the interface of the system requiring access to smart card resources, i.e. the interface of the CA system or Cl driver interface handled by the client, an event is triggered by a system 281, the client interprets this event 283 and next it triggers a relevant event of the client interface 284. Similarly, when at the client interface there appears an event 285 triggered by another block, for example, by the client manager, the client interprets this event 283 and next, it triggers a relevant event 282 of the interface of the system. This might be, for example, reading or writing specific data.

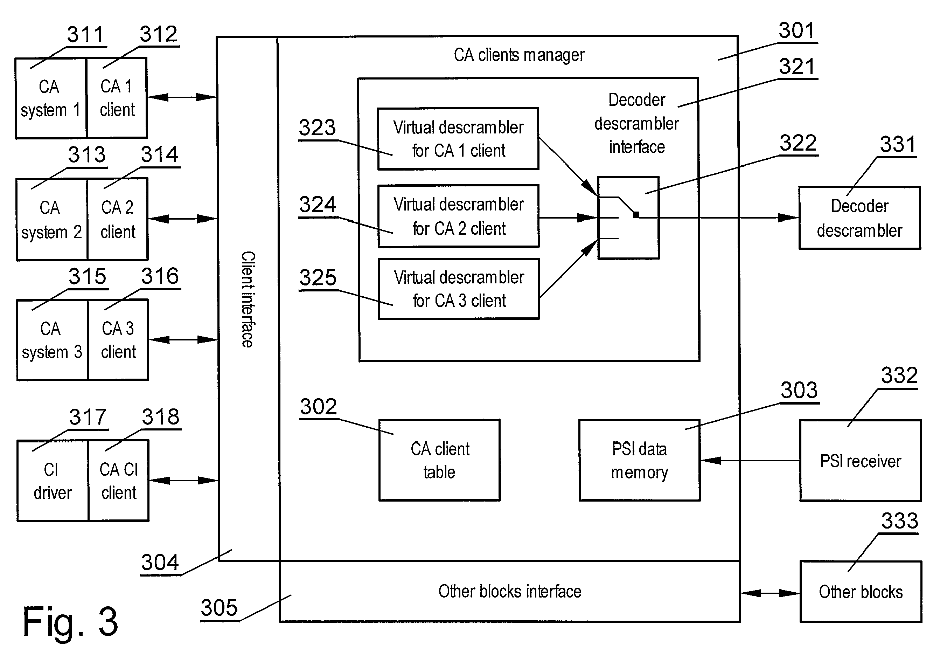

Fig. 3 presents a structure of the conditional access client manager 301. The manager communicates with the clients 312, 314, 316, 318 of the conditional access systems 311, 313, 315 and of the Cl driver 317 via a client interface 304. In such an embodiment, systems and drivers of various types may cooperate with the manager, and the only requirement is that they are provided with clients handling the client interface functions.

The client interface allows for the execution of all typical commands used for signal descrambling. These can be commands for configuring a specific slot of the descrambler or commands for updating descrambler keys.

The manager comprises a CA clients table 302, which describes properties of individual clients. A typical format of the table is presented below:

| Client | Decoder descrambler access required | Descramblin g capability | Priority | Control of decoder descrambler |
|---|---|---|---|---|
| CA 1 Client | YES | YES | 5 | NO |
| CA 2 Client | YES | NO | 2 | NO |
| CA 3 Client | YES | YES | 8 | YES |
| CA Cl Client | NO | NO | 9 | - |

The data stored in the table specifies whether if a given client requires access to the decoder descrambler then a specific cell includes "YES" value for embedded system clients, and "NO" for clients of systems provided by Cl or POD modules with built-in descramblers). The data also specify if a given client is capable of descrambling the currently received signal, the client priority which is used to select the client for performing the descrambling and the designation of the client, which currently controls the decoder descrambler. For clients, who do not require access to the decoder descrambler, no value is specified in the last column, or the value "NO" is always assigned.

In the table presented above, clients CA 1, 312, CA 2, 314 and CA 3, 316, require access to the decoder descrambler, and the CA Cl client 318 is a client of a conditional access system provided by a Cl module, which uses the descrambler of the module. CA 1 and CA 3 clients are capable of descrambling the currently received stream. The CA Cl client has the highest priority, but because they are not capable of descrambling the currently received stream, the signal is descrambled by the CA 3 client, which is granted access to the decoder descrambler.

In case when a client requiring access to the decoder descrambler is selected, a command is sent to the clients using descramblers of the Cl or POD modules, to deactivate those descramblers. In case when the descrambling is handled by an external descrambler, the other descramblers, including the decoder descrambler, are deactivated, so that the signal is descrambled only once, by one descrambler.

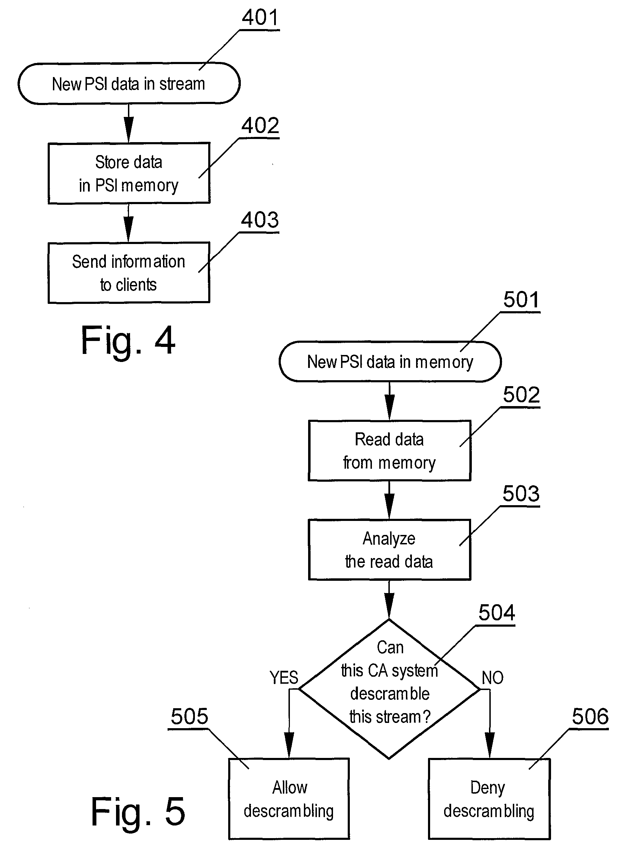

The descrambling capability is specified by each client on the basis of the PSI data of the received stream, according to the procedure shown in Fig. 5. The current version of PSI data is stored in the PSI memory 303. The PSI data is read by the manager 301 from the PSI receiver 332 and passed to clients according to the procedure shown in Fig. 4.

The system, according to this invention, has been constructed such that each CA system operates independently of the other systems. The cooperation of the systems is controlled by the manager, so there is no need for any changes in the systems themselves to interconnect them.

The manager 301 comprises an interface 321, which functions as a decoder descrambler controller. The task of the interface 321 is to transmit commands from a selected embedded conditional access system to the decoder descrambler 331. The interface 321 comprises, for each embedded CA systems 311, 313, 315, a virtual descrambler 323, 324, 325. The virtual descrambler is a software object whose structure emulates the hardware interface of the decoder descrambler, so that each embedded CA systems may operate as if it was connected directly to the hardware decoder descrambler.

A typical structure of the virtual descrambler as a software object is presented below as an example (C syntax is used):

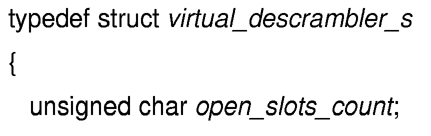

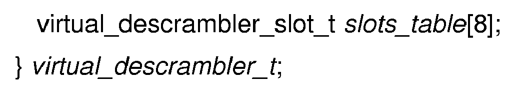

The *virtual_descrambler_*s structure comprises a *slots_table 8-element in the presented example,* which describes the slots of the virtual descrambler, which emulate the slots of the decoder descrambler. The structure also comprises information on the number of open slots *open_slots_count*, which is useful to determine the number of the next slot to be opened. The slots are described by the *virtual_descrambler_slot_*s structure. An example of such a structure is presented below:

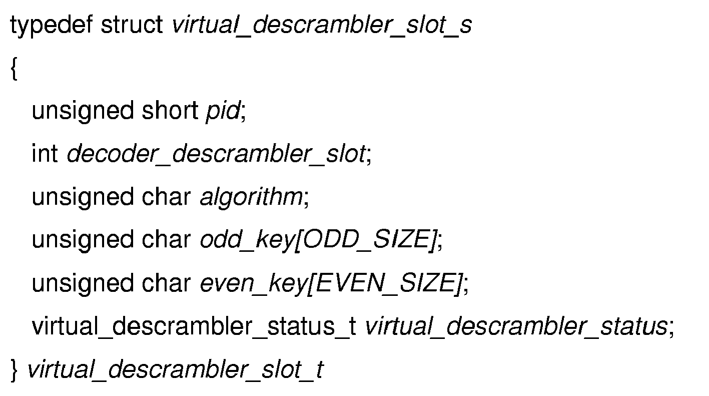

The *pid* field specifies the PID identifier of packets to be descrambled by a slot of the decoder descrambler specified in the *decoder_descrambler_slot* field. The fields *algorithm, odd_key* having the size of *ODD_SIZE,* and *even_key* having the size of *EVEN_SIZE,* specify the algorithm and the current descrambling keys for a given slot of the decoder descrambler. The *virtual_descrambler_status* field may have the value of "Open" or "Closed", reveals whether a particular slot has been already opened by a client.

The number of the slot of the virtual descrambler in the descrambler structure can be assigned consecutively for each opened slot, or can be a number referring to the number of the slot of the decoder descrambler which is to be opened by a given conditional access system.

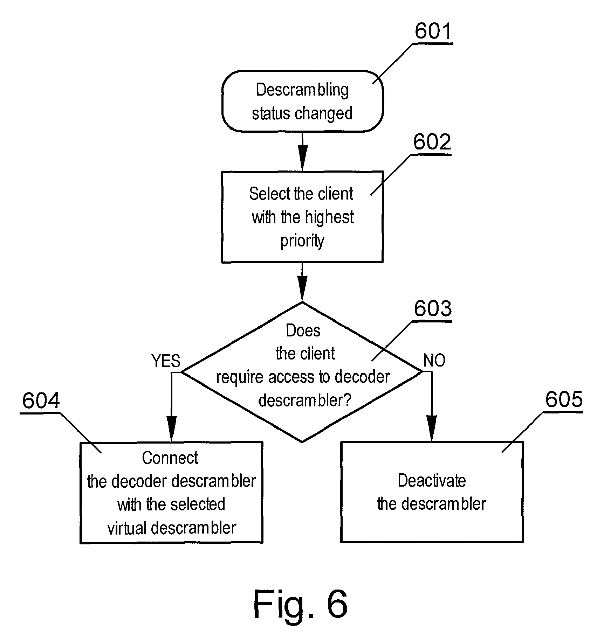

The decoder descrambler interface 321 comprises a switch 322, which connects the selected virtual descrambler with the decoder descrambler 331, according to the procedure shown in Fig. 6. Each virtual descrambler stores the current configuration set by its embedded CA system, therefore after the switch is activated, the new configuration of the hardware decoder descrambler is set immediately.

The CA client manager 301 also provides an other blocks interface 305 for communicating with other blocks 333, for example with middleware software, by which those blocks may gain access to conditional access systems data from the CA client table or may gain access to the client interface 304, via which they may communicate with a selected system. For example, the other blocks may change the priority of clients if high-level software requires descrambling by a specified system, or collect important data from a specific conditional access system, such as a smart card number, smart card entitlements, or the versions of registered CA systems handled by clients.

Fig. 4 presents the procedure for updating PSI data in the manager memory. The procedure starts in step 401 after receiving a message from the PSI receiver that new PSI data appeared in the stream. The manager reads specific PSI data in step 402 in the presented example and then reads PMT and CAT tables and stores them in the PSI data memory. In the next step, 403, the manager sends information on updating PSI data to all CA clients that are handled.

Fig. 5 presents a flow chart of a procedure for collecting PSI data by individual clients. The client, having received a message from the manager in step 501 about a new version of PSI data, reads this data from the PSI memory in step 502, and transmits it to the CA system it handles. The CA system analyzes the data asynchronously in step 503, and on their basis, it decides in step 504 if it can descramble the stream described by this data. If so, the client in step 505 sets, in the CA client table of the manager, the capability of descrambling the stream by the CA system that it is handling. If the system is a system embedded in the decoder, then it starts communicating, via the client, with the virtual descrambler assigned to it. If the system is provided by an external module, it starts communication with the descrambler of that module. If it cannot descramble the stream, the client sets, in the CA client table, the lack of a descrambling capability, in step 506.

Fig. 6 presents the procedure for controlling the descrambler switch. The procedure is activated in step 601 when one of the clients changes its capability of descrambling of the currently received stream. For example, this may happen when one of the clients sets the descrambling capability to active, or when the client of the currently descrambling system disabled its descrambling capability. Then, in step 602, the switch selects, from the clients capable of descrambling, the client with the highest priority. Next, in step 603, it checks if a given client requires access to the decoder descrambler. If so, then in step 604 it connects the hardware decoder and the selected virtual descrambler, so that the decoder descrambler operates according to the configuration set by the selected CA system. At the same time the operation of the descramblers in the external modules is disabled. If not, then in step 605 the operation of the decoder descrambler and descramblers of the external modules is deactivated, and the descrambling is performed by a descrambler of the selected Cl or POD module.

The described invention allows cooperation of embedded conditional access systems of various providers in one digital television decoder, as well as the systems provided by external Cl or POD modules. By using the virtual descramblers, each embedded CA system operates as if it were connected to the decoder descrambler. It is not necessary to modify the structure of those CA systems to adapt them to cooperate with other systems.

The preferred embodiment having been thus described, it will now be evident to those skilled in the art that further variation thereto may be contemplated. Such variations are not regarded as a departure from the invention, the true scope of the invention being set forth in the claims appended hereto.

## Claims

1. A system for controlling conditional access systems in a digital television decoder (101) comprising a signal processing block (131) with a decoder descrambler (132) and a conditional access block (141) with at least one conditional access system (143, 145, 147, 149), **characterized in that** each conditional access system (143, 145, 147, 149) is provided with a client (142, 144, 146, 148) supporting communication via a client interface (152), and the conditional access block (141) comprises a conditional access client manager (151) handling communication with conditional access systems (143, 145, 147, 149) via clients (142, 144, 146, 148) using the client interface (152) and controlling descrambling of television data by selecting a conditional access system (143, 145, 147, 149) responsible for descrambling a currently received signal and configuring the decoder descrambler (132) depending on a selected conditional access system (143, 145, 147, 149).

2. The system according to claim 1, **characterized in that** the client (142, 144, 146, 148) is a block which converts events of a conditional access system-specific interface (221, 222, 223, 224) to events of the client interface (152), and converts events of the client interface (152) to events of the conditional access system-specific interface (221, 222, 223, 224).

3. The system according to claim 1, **characterized in that** the conditional access client manager (301) comprises virtual descramblers (323, 324, 325) being software objects emulating an interface (321) of the decoder descrambler (331) and **characterized in that** each of the virtual descramblers (323, 324, 325) is assigned to each conditional access system (311, 313, 315, 317) and
**characterized in that** each conditional access system (311, 313, 315, 317) perceives the virtual descrambler (323, 324, 325) as the decoder descrambler, and **characterized in that** the conditional access client manager additionally comprises a decoder descrambler switch (322) for controlling the decoder descrambler (331) by transmitting to it a configuration of the virtual descrambler assigned to a selected conditional access system.

4. The system according to claim 3, **characterized in that** the virtual descrambler is a software object whose structure emulates a hardware interface of the decoder descrambler and its structure describes at least slots of the decoder descrambler and their operating configuration.

5. The system according to claim 1, **characterized in that** the conditional access client manager (301) comprises a client table (302) for storing data describing the systems handled by individual clients, the data describing at least a requirement of a particular conditional access system for access to the decoder descrambler and a capability to descramble a signal currently received by the system, and the data being used to select the conditional access system responsible for descrambling the signal currently received.

6. The system according to claim 5, **characterized in that** in the client table (302) there are additionally stored priorities of individual clients, deciding on a priority of one system versus other systems capable of descrambling the currently received stream, while selection of the conditional access system responsible for descrambling the currently received signal.

7. The system according to claim 1, **characterized in that** the conditional access client manager comprises a PSI data memory (303) for storing selected data related to the currently received stream, the data being read by conditional access systems after notification about changes in this data.

8. The system according to claim 1, **characterized in that** the conditional access systems are systems embedded in the decoder and/or systems provided by external modules.

9. The system according to claim 1, **characterized in that** the clients (142, 144, 146, 148, 312, 314, 316, 318) are software modules for conditional access systems, which allow other modules of decoder software communicating with the conditional access systems via an interface uniform for all clients (142, 144, 146, 148, 312, 314, 316, 318).

10. A method for controlling conditional access systems in a digital television decoder comprising a signal processing block with a decoder descrambler and a conditional access block with at least one conditional access system, **characterized in that** a client supporting communication via a client interface is provided for each conditional access system, a conditional access client manager is provided, which handles communication with conditional access systems via clients using the client interface and for controls the decoder descrambler, and the descrambling of television data is controlled by selecting a conditional access system responsible for descrambling a currently received signal and configuring the decoder descrambler depending on a selected conditional access system.

11. The method according to claim 10, **characterized in that** in the conditional access client manager there are created virtual descramblers, which are software objects emulating the interface of the decoder descrambler, and a separate virtual descrambler is assigner to each conditional access system such that the system perceives the virtual descrambler as the decoder descrambler, and the decoder descrambler is controlled via the decoder descrambler switch, by transmitting to it the configuration of the virtual descrambler assigned to a selected conditional access system.

12. The method according to claim 10, **characterized in that** in the conditional access client manager there is created a client table, in which data describing the systems handled by individual clients are stored, the data describing at least the requirement of a particular conditional access system for access to the decoder descrambler and the capability to descramble the signal currently received by the system, and the data being used to select the conditional access system responsible for descrambling the currently received signal.

13. The method according to claim 12, **characterized in that** the conditional access system responsible for descrambling the currently received stream is selected from systems, which are capable of descrambling the currently received stream.

14. The method according to claim 13, **characterized in that** the conditional access system responsible for descrambling the currently received stream is selected when in the client table a change of descrambling capability of the currently received stream by one of systems is detected.

15. The method according to claim 12, **characterized in that** when a conditional access system is selected which does not require access to decoder descrambler, the decoder descrambler is controlled by deactivating it.

16. The method according to claim 12, **characterized in that** in the client table there are additionally stored priorities of individual clients, deciding on the priority of one system versus other systems capable of descrambling the currently received stream, while selection of the conditional access system responsible for descrambling the currently received signal.

17. The method according to claim 16, **characterized in that** the system of the highest priority is selected from the systems, which are capable of descrambling the currently received signal, as the system responsible for descrambling the currently received signal.

18. The method according to claim 10, **characterized in that** in the conditional access client manager a PSI data memory is created, in which selected data related to currently received stream are stored, and if the data changes, a message about the change is sent to the conditional access systems.

19. The method according to claim 18, **characterized in that** in each client when a message on PSI data change is received, the PSI data is read from the PSI memory, analyzed in the conditional access system, and information is sent to conditional access client manager about the capability of descrambling the currently received signal by that system.
